# EUROPÄISCHE PATENTSCHRIFT

(11) **EP 2 901 860 B1**
(45) Veröffentlichungstag und Bekanntmachung des Hinweises auf die Patenterteilung: **21.12.2016**
(21) Anmeldenummer: 15152419.6
(22) Anmeldetag: 26.01.2015
(51) Int. Cl.: A21C 5/04

(54) **Teigteilmaschine**
Dough dividing machine
Diviseuse pour pâtes

(30) Priorität: 28.01.2014 DE 102014201518
(43) Veröffentlichungstag der Anmeldung: 05.08.2015
(73) Patentinhaber: WP Kemper GmbH, 33397 Rietberg (DE)
(72) Erfinder: Lazis, Jan, 33605 Bielefeld (DE)
(74) Vertreter: Rau, Schneck & Hübner Patentanwälte Rechtsanwälte PartGmbB

(56) Entgegenhaltungen:
- EP-A1- 0 494 367
- AT-B- 351 480
- DE-A1- 10 238 707

## Beschreibung

Die Erfindung betrifft eine Teigteilmaschine nach dem Oberbegriff des Anspruchs 1. Ferner betrifft die Erfindung eine Teigverarbeitungsanlage nach Anspruch 15.

Eine Teigteilmaschine der eingangs genannten Art ist bekannt aus der EP 0 494 367 A1 und der WO 03/022 057 A2. Die AT 13 119 U1 zeigt eine Portioniereinheit für Teigteilmaschinen.

EP0494367 A1 offenbart im Zusammenhang allen Merkmalen des Oberbegriffs des Anspruchs 1.

Es ist eine Aufgabe der vorliegenden Erfindung, eine Teigteilmaschine derart weiterzubilden, dass einzelne Baueinheiten der Teigteilmaschine zu Reinigungs-, Wartungs- und/oder Reparaturzwecken und/oder für einen Produkt- bzw. Formatwechsel einfach aus der Teigteilmaschine lösbar sind.

Diese Aufgabe ist erfindungsgemäß gelöst durch eine Teigteilmaschine mit den im Anspruch 1 angegebenen Merkmalen.

Erfindungsgemäß wurde erkannt, dass eine modulartige Ausbildung der Teigteilmaschine die Lösbarkeit einzelner Baueinheiten der Teigteilmaschine verbessert. Die Teigteilmaschine weist mindestens zwei der folgenden Module auf: ein Zuführkammer-Modul, das durch einen Zuführkammerbehälter gebildet ist, ein Trichter-Modul, das durch einen Teig-Zugabetrichter gebildet ist, ein Kolben-Modul, das durch einen Teig-Zuführkolben gebildet ist, und ein Mundstück-Modul, das durch ein Teig-Mundstück gebildet ist. Dabei ist mindestens eine Schnellverbindungseinrichtung zum Zusammenbau und zur Demontage der Module vorgesehen. Vorteilhafterweise ist jedem der Module eine Schnellverbindungseinrichtung zugeordnet. Bei den Schnellverbindungseinrichtungen kann es sich um Schnellspann-Mittel oder andere geeignete Schnellverbindungseinrichtungen handeln. Durch die einfache Lösbarkeit wird die Reinigung, Wartung und Reparatur der einzelnen Module der Teigteilmaschine deutlich vereinfacht. Insbesondere werden Gestaltungen der Teigteilmaschine ermöglicht, bei denen jedenfalls in Bezug auf bestimmte Montagearbeiten keine festgelegte Montage-Reihenfolge der Module eingehalten werden muss. Ferner ist jeweils eine Zuordnung der Module zu einer bestimmten Funktion der Teigteilmaschine ermöglicht, wodurch eine klare strukturelle Gliederung der Teigteilmaschine geschaffen ist. Durch die funktionale Zuordnung ist auch eine Übersichtlichkeit der Baueinheiten der Teigteilmaschine verbessert. Auch ein Produkt- bzw. Formatwechsel kann hierdurch vereinfacht werden.

Eine modulare Demontierbarkeit des Zuführkammer-Moduls, des Kolben-Moduls und des Mundstück-Moduls aus der Teigteilmaschine gemäß den Ansprüchen 2, 3 und 4 ermöglicht eine separate Reinigung, Wartung oder Reparatur des jeweils herausgenommenen Moduls. Zu dem sind die in der Teigteilmaschine verbleibenden Module besser zugänglich und daher ebenfalls leichter zu reinigen, warten oder reparieren. Unter modularem Herausnehmen ist zu verstehen, dass das jeweilige Modul als zusammenhängende Baueinheit von der Teigteilmaschine lösbar ist. In einem etwaigen Schadensfall eines Moduls wäre das betroffene Modul ersetzbar, ohne dass ein Austausch nicht beschädigter Module erforderlich ist.

Eine Teigteilmaschine nach Anspruch 5 ermöglicht eine Anordnung der Module in einem gemeinsamen Rahmen. Dadurch wird der konstruktive Aufbau der Teigteilmaschine weiter vereinfacht.

Eine Teigteilmaschine nach Anspruch 6 schafft die Möglichkeit einer Reinigung, Reparatur und/oder Wartung eines Moduls ohne dass ein Herausnehmen oder Verlagern eines anderen Moduls notwendig ist. Auch ein Produkt- bzw. Formatwechsel kann hierdurch vereinfacht werden. Der Rahmen kann vorzugsweise als Führung für eine Verlagerungsbewegung der einzelnen Module dienen. Vorzugsweise können die einzelnen Module durch die Schnellverbindungseinrichtung mit dem Rahmen verbindbar sind.

Ein geführt verlagerbares Zuführkammer-Modul nach Anspruch 7 ermöglicht es, die Zuführkammer zu Reinigungs- bzw. Wartungszwecken schnell und einfach zugänglich zu machen.

Ein relativ zum Teig-Zugabetrichter geführt verlagerbares, insbesondere wegklappbares Zuführkammer-Modul nach Anspruch 8 ermöglicht ferner eine gute Zugänglichmachung des Teig-Zugabetrichters von unten, ohne das ein Ausbau von Modulen erforderlich ist.

Durch eine Verlagerbarkeit des Mundstücks nach Anspruch 9 ist eine Zugänglichmachung des Mundstücks von allen Seiten her ermöglicht, ohne dass das Mundstück ausgebaut werden muss. Das Mundstück-Modul ist vorzugsweise um eine Mundstück-Schwenkachse verschwenkbar.

Durch eine Teigteilmaschine nach Anspruch 10 ist eine Zugänglichmachung des Trichter-Moduls von allen Seiten her ermöglicht, ohne dass das Trichter-Modul ausgebaut werden muss. Das Trichter-Modul ist vorzugsweise um eine Trichter-Schwenkachse verschwenkbar.

Eine Teigteilmaschine nach den Ansprüchen 11 und 12 ermöglicht jeweils eine sichere Führung der Verlagerung des Kolben-Moduls und des Zuführkammer-Moduls durch Linearführungen. Zur Führung der Verlagerungsbewegungen des Kolben-Moduls und des Zuführkammer-Moduls kann ein und dieselbe Linearführung verwendet werden, wodurch sich Bauraum sparen lässt.

Ein Linearaktor als Hubverlagerungsantrieb mit einer linear angetriebenen Antriebskomponente nach Anspruch 13 liefert neue Freiheitsgrade in Bezug auf die Anordnung der Komponenten der Teigteilmaschine. Insbesondere ein Hebelgestänge, welches bei Teigteilmaschinen des Standes der Technik zur Übertragung eines Drehantriebs in eine Antriebsbewegung zur Hubverlagerung des Teig-Zuführkolbens dient, entfällt. Der Linearaktor kann kompakt ausgeführt sein. Über den Linearaktor findet der Hubverlagerungsantrieb des Teig-Zuführkolbens abgeleitet ausschließlich über Linearbewegungen statt. Auf ein Umlenkgetriebe, welches eine rotatorische Antriebsbewegung in eine Linearbewegung umwandelt, kann verzichtet werden. Über den Linearaktor kann eine Hubverlagerung des Teig-Zuführkolbens mit definiert vorgegebener Geschwindigkeit erfolgen. Auch die Vorgabe eines definierten Geschwindigkeitsprofils der Hubverlagerung des Teig-Zuführkolbens ist über eine entsprechende Ansteuerung des Linearaktors möglich. Es könne beispielsweise abhängig vom zu verarbeitenden Teig bzw. abhängig von der Größe der abzuteilenden Teigportion bzw. abhängig von der Menge des gleichzeitig zu verarbeitenden Teiges eine maximale Hubverlagerungsgeschwindigkeit vorgegeben werden. Ein Geschwindigkeitsprofil der Hubverlagerung kann beispielsweise mit einer ansteigenden und einer abfallenden Geschwindigkeitsrampe ausgeführt sein. Über den Linearaktor kann eine Gesamthubweite der Hubverlagerung exakt vorgegeben werden. Auch diese Hubweite kann an die vorzugebende Teigportion exakt angepasst werden. Vorzugsweise ist die Antriebskomponente über eine Umlenkverbindung mit dem Teig-Zuführkolben verbunden. Alternativ kann die Antriebskomponente linear mit dem Teig-Zuführkolben verbunden sein. Solche Verbindungen der Antriebskomponente mit dem Teig-Zuführkolbenstellen Varianten dar, die nach den Bauraumerfordernissen realisiert sein können. Wenn die Antriebskomponente linear mit dem Teig-Zuführkolben verbunden ist, verlaufen die Antriebskomponente und der Teig-Zuführkolben längs einer gemeinsamen Linearverlagerungsachse. Der Hubverlagerungsantrieb kann als Linear-Direktantrieb, insbesondere ohne mechanische Komponente, oder kann als zweifaches Zahnstangen-Hubgetriebe mit Servomotor ausgeführt sein. Der Servomotor kann mit einem Frequenzumrichter ausgerüstet sein. Soweit der Zuführkolben über einen Servoantrieb angesteuert wird, kann ein stufenlos regelbarer Druck eingestellt werden, der über den Zuführkolben auf den Teig ausgeübt wird. Ein separater Drucksensor zur Messung des Teigdrucks kann vorgesehen sein, ist aber nicht zwingend, da ein Servomotor Strom als Maß für den Druck abgegriffen werden kann, der über den Zuführkolben auf den Teig ausgeübt wird. Dieser Druck kann auf jede Teigrezeptur individuell angepasst werden. Eine Druckanpassung kann beispielsweise bei Teig-Gewichtsungenauigkeiten vorgenommen werden. Es kann ein maximaler Druck vorgegeben werden, den der Zuführkolben auf den Teig ausübt. Eine unerwünschte Zerstörung von Teig aufgrund eines zu hohen Drucks, ausgeübt durch den Zuführkolben, wird hierdurch vermieden. Durch eine Ansteuerung des Zuführkolbens über einen Servoantrieb kann auch ein stufenlos einstellbarer Weg des Zuführkolbens insbesondere in Abhängigkeit zu einem individuell eingestellten Zuführkolben-Druck, vorgegeben werden. Schließlich kann auch druckunabhängig ein Weg des Zuführkolbens mit Hilfe des Servoantriebs stufenlos eingestellt werden. Bei kleineren Teiggewichten kann beispielsweise nicht eine komplette Kammerkapazität ausgenutzt sein. Eine unnötige Druckbeaufschlagung des Teiges insbesondere vor Aufnahme des Teiges in einer Messtrommel, wird vermieden. Ein Zahnstangen-Hubgetriebe mit Servomotor ist beispielsweise bekannt aus dem Gesamtkatalog lifgo® & lean SL® 5 der LEANTECHNIK AG, Stand 07.2013, insbesondere auf der Seite 26. Eine Führungsfunktion kann hierbei vollständig durch eine integrierte Lagerung des Hubgetriebes übernommen werden. Ein sich eignender Linear-Direktantrieb ist bekannt aus dem Prospekt "Lineare Direktantriebe - Drehstrom-Synchron-Linearmotoren - Baureihe LP mit Flüssigkeits- oder Luftkühlung" der Oswald Elektromotoren GmbH, Version 0413.

Ein elektromechanischer Aktor nach Anspruch 14 ist hinsichtlich seines kompakten Aufbaus und der realisierbaren Hubkraft eine bevorzugte Antriebsvariante. Die Antriebskomponente kann im Linearaktor über einen internen Spindelantrieb angetrieben sein.

Vorzugsweise ist der in der Teig-Zuführkammer befindliche Teig mittels des Teig-Zuführkolbens durch das Teig-Mundstück hin zu mindestens einer Teig-Messkammer zur Vorgabe einer Teigportion weiterförderbar. Dabei ist der Teig-Zuführkolben hubverlagerbar zwischen einer Freigabestellung, in der der Teig-Zuführkolben die Teig-Zuführkammer zum Zuführen von Teig freigibt und einer Zuführstellung, in der der Teig-Zuführkolben einen Inhalt der Teig-Zuführkammer durch das Teig-Mundstück hin zu mindestens einer Teig-Messkammer zur Vorgabe einer Teigportion weiterfördert. Eine Mehrzahl von Teig-Messkammern erlaubt eine parallele Vorgabe einer entsprechenden Anzahl von Teigportionen. Der Teig-Zuführkolben kann auch bei einer Mehrzahl von Teig-Messkammern als ein Kolben ausgeführt sein. Alternativ ist es möglich, eine entsprechende Mehrzahl von Teig-Zuführkolben zu gestalten, die über einen gemeinsamen Hubverlagerungsantrieb oder individuell jeweils über einen eigenen Hubverlagerungsantrieb angetrieben werden. Soweit in diesem Fall mehrere Hubverlagerungsantriebe vorliegen, können diese individuell angesteuert werden.

Vorzugsweise bildet der angetriebene Teig-Zuführkolben, die Linearführung zur Führung einer Hubverlagerung des Teig-Zuführkolbens in einer Führungsebene und der Linearaktor eine Baugruppe. Die Erstreckung dieser Baugruppe ist senkrecht zur Führungsebene vorteilhafterweise nicht mehr als fünfmal so groß wie eine Erstreckung des Zuführkolbens senkrecht zur Führungsebene. Eine derartige Baugruppe nutzt den Linearaktor zu einer besonders kompakten Anordnung. Es kann innerhalb der Teigteilmaschine so Bauraum gespart werden, der für andere Komponenten zur Verfügung steht. Soweit mehrere Teig-Messkammern zum Einsatz kommen, können diese Teig-Messkammern in der Führungsebene der Baugruppe liegen. Es ist von Vorteil, wenn der Linearaktor senkrecht zur Führungsebene versetzt zu dem Teig-Zuführkolben angeordnet ist. Alternativ kann der Linearaktor in der Führungsebene angeordnet sein. Derartige Anordnungsvarianten haben sich als je nach den Bauraumanforderungen geeignete Alternativen herausgestellt. Grundsätzlich ist es auch möglich, zwischen dem Linearaktor und dem Führungskolben noch ein Umlenkgetriebe vorzusehen. Als Antriebsvarianten für den Linearaktor können ein Linear-Direktantrieb, insbesondere ohne mechanische Komponenten, oder ein doppeltes Zahnstangen-Hubgetriebe mit Servomotor zum Einsatz kommen.

Die erfindungsgemäße Teigteilmaschine ist gemäß Anspruch 15 in einer Teigverarbeitungsanlage einsetzbar.

Ausführungsbeispiele der Erfindung werden nachfolgend anhand der Zeichnung näher erläutert. In dieser zeigen:
- Fig. 1: in einem vertikalen Längsschnitt schematisch Hauptkomponenten einer Teigteilmaschine einschließlich einer Baugruppe mit insbesondere mehreren, zueinander parallel angetriebenen Teig-Zuführkolben sowie einer Linearführung und einem Linearaktor hierfür;
- Fig. 2: eine Ansicht der Baugruppe nach Figur 1 aus Blickrichtung II in Figur 1 mit ausgeblendetem Mundstück;
- Fig. 3: eine Aufsicht auf die Baugruppe nach Figur 1;
- Fig. 4, 5: zwei perspektivische Ansichten der Baugruppe nach Figur 1;
- Fig. 6: noch stärker schematisch in einer Seitenansicht eine weitere Ausführung einer derartigen Baugruppe; und
- Fig. 7: eine perspektivische Ansicht der Teigteilmaschine mit Modulen der Teigteilmaschine in einer verlagerten Position.

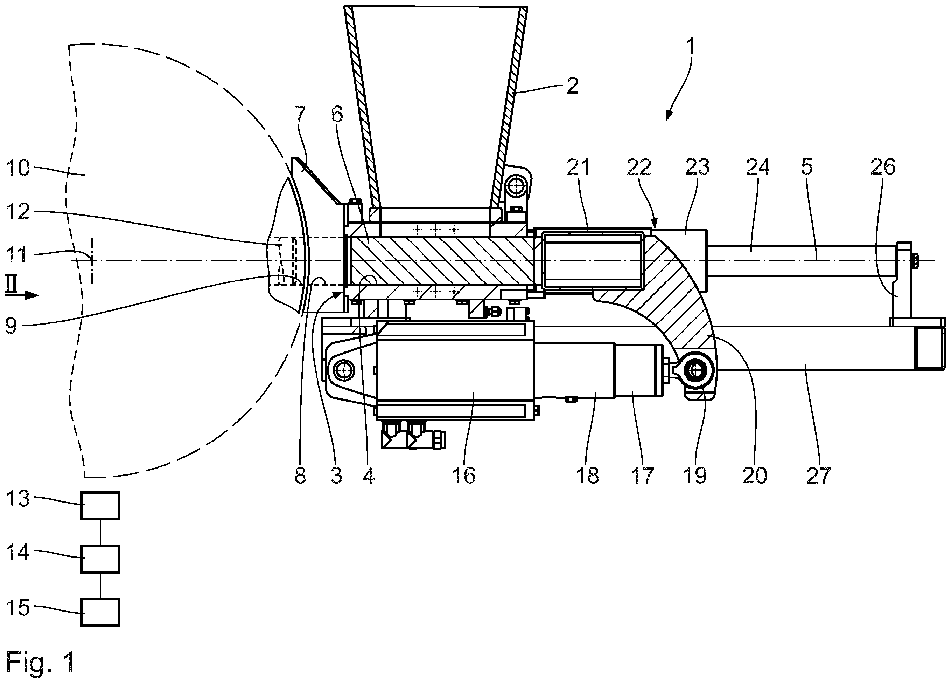

Eine Teigteilmaschine 1 hat einen in der Fig. 1 geschnitten dargestelltes Trichter-Modul, das durch einen Teig-Zugabetrichter 2 gebildet ist, durch den Teig von oben her manuell oder automatisch zugeführt werden kann. Am unteren Auslass des Teig-Zugabetrichters 2 befindet sich ein Zuführkammer-Modul, das durch einen Zuführkammerbehälter 3 gebildet ist. Das Innere des Zuführkammerbehälters 3 bildet eine Teig-Zuführkammer 4.

Innerhalb des Zuführkammerbehälters 3 läuft in einer Führungsebene 5, die in der Fig. 1 horizontal verläuft und senkrecht auf der Zeichenebene steht, ein Kolben-Modul, das durch einen Teig-Zuführkolben 6 gebildet ist, der ebenfalls gestrichelt angedeutet ist. Im Teig-Förderweg nach der Teig-Zuführkammer 4 ist ein Mundstück-Modul angeordnet, das durch ein Teig-Mundstück 7 gebildet ist.

Ferner sind in den beigefügten Figuren nicht dargestellte Schnellverbindungseinrichtungen zum Zusammenbau und zur Demontage des Trichter-Moduls 4, des Kolben-Moduls 6 und des Mundstück-Moduls 7 vorgesehen. Jedem der Module ist dabei eine Schnellverbindungseinrichtung zugeordnet. Bei den Schnellverbindungseinrichtungen handelt es sich vorzugsweise um an sich bekannte Spannverschlüsse. Auch andere Schnellverbindungseinrichtungen, mittels denen sich die Module schnell und ohne zusätzliche Werkzeuge aus der Teigteilmaschine 1 lösen lassen, können alternativ verwendet werden.

Der Teig-Zuführkolben 6 ist hubverlagerbar zum Zuführen des in der Teig-Zuführkammer 4 befindlichen Teiges zu dem Mundstück 7. Der Teig-Zuführkolben 6 ist durch eine Kolben-Tragvorrichtung 32 getragen und lösbar gehalten. Eine Verbindung zwischen Teig-Zuführkolben 6 und Kolben-Tragvorrichtung 32 ist durch eine geeignete Schnellverbindungseinrichtung geschaffen, beispielsweise eine Schraub-, Rast- oder Klemmverbindung.

Der Teig-Zuführkolben 6 ist hubverlagerbar zwischen einer nicht in der Fig. 1 dargestellten und gegenüber der Stellung nach Fig. 1 nach rechts verlagerten Freigabestellung, in der der Teig-Zuführkolben 6 die Teig-Zuführkammer 4 zum Zuführen von Teig aus dem Teig-Zugabetrichter 2 freigibt, und einer in der Fig. 1 dargestellten Zuführstellung, in der der Teig-Zuführkolben 6 einen Inhalt der Teig-Zuführkammer 4, also den dort befindlichen Teig, durch einen Übergabekanal 8 durch das Teig-Mundstück 7 hin zu Teig-Messkammern 9 zur Vorgabe von Teigportionen weiterfördert. Der Übergabekanal 8 ist in der Fig. 1 schematisch als gerade verlaufender Kanal gezeigt. Tatsächlich verjüngt sich der Übergabekanal 8 in Teig-Förderrichtung konisch. Der Teig-Zuführkolben 6 weist eine Teigschaberkante auf. Durch die Teigschaberkante, welche an dem Teig-Zuführkolben 6 derart angeordnet ist, dass sie in Richtung Mundstück-Modul 7 zeigt, wird eine ungewollte Mitnahme von Teig bei Verlagerung des Teig-Zuführkolbens 6 von der Zuführstellung zurück zur Freigabestellung verhindert.

Die Teigteilmaschine 1 hat eine Mehrzahl von Übergabekanälen 8 im Teig-Mundstück 7, die senkrecht zur Zeichenebene der Fig. 1 nebeneinander angeordnet sind, beispielsweise 4, 5, 6, 7, 8, 10, 12, 15, 20 oder noch mehr Übergabekanäle 8. Den Übergabekanälen 8 sind zur Vorgabe einer entsprechenden Anzahl von Teigportionen die Teig-Messkammern 9 in entsprechender Anzahl zugeordnet.

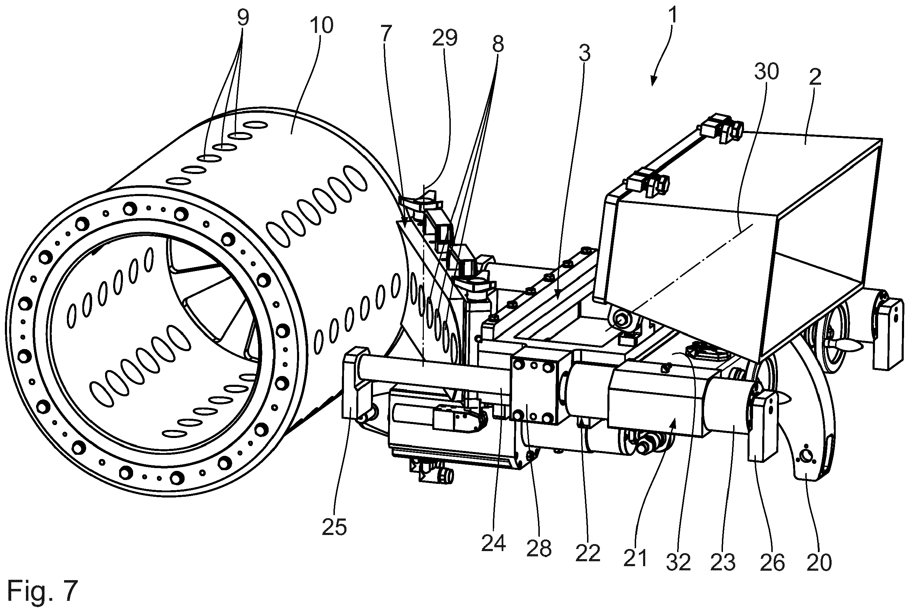

Die Teig-Messkammern 9 sind in einer Messtrommel 10 angeordnet, die eine Mehrzahl von Reihen entsprechender Teig-Messkammern 9 verteilt in Umfangsrichtung um eine Trommelachse 11 der Messtrommel 10 aufweist. Die Teig-Messkammern 9 sind angetrieben um die Trommelachse 11 drehbar. Die Messtrommel 10 ist zu einer Seite hin offen ausgeführt, wie insbesondere bei der noch zu beschreibenden Ausführung nach Fig. 7 dargestellt ist. Hierdurch wird das Innere der Messtrommel 10 einfach zugänglich.

In jeder der Teig-Messkammern 9 läuft ein Messkolben 12, der in der Fig. 1 gebrochen dargestellt ist und dessen Endposition nach Überführung des Teigs in die Teig-Messkammer 9 die jeweilige Teigportion vorgibt.

Ein weiterer Bearbeitungs- bzw. Förderweg der Teigportionen innerhalb der Teigteilmaschine 1 ist in der Fig. 1 stark schematisch angedeutet. Nach Verlassen der Messtrommel 10 werden die Teigportionen über eine Fördereinrichtung 13, bei der es sich um ein Förderband oder um eine der Anzahl der Teig-Messkammern 9 entsprechende Anzahl von Einzel-Förderbändern handeln kann, hin zu einer Wirktrommel 14 gefördert, in der die Teigportionen in an sich bekannter Weise gewirkt werden. Die gewirkten Teigportionen werden dann über eine weitere Fördereinrichtung 15, die grundsätzlich der Fördereinrichtung 13 entsprechen kann, einer weiteren Teigbearbeitung zugeführt.

Ein Hubverlagerungsantrieb 16 des Teig-Zuführkolbens 6 ist als Linearaktor mit einer linear angetriebenen Antriebskomponente 17 in Form einer Kolbenstange ausgeführt. Die Kolbenstange 17 ist in der Fig. 1 eingezogen dargestellt. Die Kolbenstange 17 ist geführt über eine Führungsbuchse 18, die rahmenfest mit dem Hubverlagerungsantrieb 16 verbunden ist.

Ein freies Ende der Antriebskomponente 17 trägt eine Montageöse 19, die über eine Umlenkverbindung 20 mit einem Führungsschlitten 21 verbunden ist, der wiederum fest mit dem Teig-Zuführkolben 6 verbunden ist. Der Führungsschlitten 21 ist Teil einer Linearführung 22 zur Führung der Hubverlagerung des Teig-Zuführkolbens 6 in der Führungsebene 5. Zu der Linearführung 22 gehören zwei parallel in der Führungsebene 5 nebeneinander angeordnete Führungsbuchsen 23, von denen in der Fig. 1 nur die dem Betrachter zugewandte zu sehen ist. Die Führungsbuchsen 23 und der Zuführkammerbehälter 3 laufen auf Führungsstangen 24, deren beide Enden über Lagerböcke 25, 26 fest mit einem Rahmen 27 der Teigteilmaschine 1 verbunden sind.

Durch die Linearführung 22 ist ein Spaltmaß zwischen Teig-Zuführkolben 6 und dem Zuführkammerbehälter 3 exakt einstellbar, wodurch weniger Reibung zwischen Zuführkammerbehälter 3 und Teig-Zuführkolben 6 erreichbar ist. Zudem kann unerwünschter Teigaustritt aus dem Zuführkammerbehälter 3 vermieden werden.

Der Linearaktor 16 ist als elektromechanischer Aktor ausgeführt. Die Antriebskomponente 17 stellt also eine elektromechanische Stellkomponente dar. Der Linearaktor 16 kann als elektromechanischer Stellzylinder ausgeführt sein. Ein Linearantrieb für die Antriebskomponente 17 kann über einen internen Spindelantrieb des Linearaktors 16 erfolgen. Der Linearaktor 16 ist als Servo-Linearaktor mit einem Servogetriebe ausgebildet.

Eine Hubverlagerung des Teig-Zuführkolbens 6 erfolgt folgendermaßen: Sobald die Teig-Zuführkammer 4 mit Teig befüllt ist und eine Reihe leerer Teig-Messkammern 9 fluchtend zu den Übertragungskanälen 8 durch entsprechende Drehung der Messtrommel 10 bereitsteht, wird der Linearaktor 16 betätigt und der Teig-Zuführkolben 6 wird aus der Freigabestellung in die Zuführstellung nach Fig. 1 überführt. Hierzu wird die Antriebskomponente 17 des Linearaktors 16 eingezogen. Hierbei läuft die Antriebskomponente 17 in der Führungsbuchse 18 und parallel hierzu läuft der Führungsschlitten 21 mit den Führungsbuchsen 23 auf den Führungsstangen 24. Eine in der Fig. 1 links dargestellte vordere Stirnwand des Teig-Zuführkolbens 6 presst den Teig durch die Übergabekanäle 8 in die Teig-Messkammern 9, bis dort, vorgegebenen über die Position der jeweiligen Messkolben 12, eine vorgegebene Teigportion eingefüllt ist. Die Messtrommel 10 dreht dann zur Weiterführung der Teigportionen weiter.

Alternativ zu den beschriebenen Führungsbuchsen 18 und 23 kann eine Linearführung der Antriebskomponente 17 bzw. des Teig-Zuführkolbens 6 auch über eine andere Ausgestaltung einer Linearführung erfolgen, beispielsweise über eine Lineargleitführung, z. B. in Form einer Schwalbenschwanznut, oder eine Linearwälzführung. Anstelle des Linearaktors 16 kann auch eine andere Form eines Linearantriebs zum Einsatz kommen, z. B. ein Linear-Direktantrieb oder ein zweifaches Zahnstangen-Hubgetriebe mit Servomotor. Auch ein Pneumatikzylinder oder ein Hydraulikzylinder können zum Einsatz kommen.

Bei der Ausführung nach Fig. 1 ist der Linearaktor 16 senkrecht zur Führungsebene 5 versetzt zum Teig-Zuführkolben 6 angeordnet.

Zu Reinigungs- bzw. Wartungszwecken kann die das Zuführkammer-Modul 3 bei in die Freigabestellung zurückgezogenem Schlitten 21, geführt über die Führungsstangen 24, relativ zum Rahmen 27 verlagert werden, sodass die Teig-Zuführkammer 4, wie in Fig. 7 dargestellt, frei zugänglich wird. Hierzu ist die Teig-Zuführkammer 4 über Lagerbuchsen 28 an den Führungsstangen 24 gelagert. Fig. 7 zeigt das Zuführkammer-Modul 3 in der verlagerten Position. Das Zuführkammer-Modul 3 kann alternativ auch relativ zum Teig-Zugabetrichter 2 verlagerbar sein.

Die Linearführung 22 dient sowohl zur Führung der Hubverlagerung des Kolben-Moduls 6 als auch zur Führung der Verlagerung des Zuführkammer-Moduls 3.

Wie Fig. 7 auch zu entnehmen, ist auch das Mundstück-Modul 7 relativ zum Zuführkammer-Modul 3 verlagert. Dabei ist das Mundstück-Modul 7 um eine Mundstück-Schwenkachse 29 verschwenkbar. Das Mundstück-Modul 7 ist relativ zum Zuführkammer-Modul 3 geführt schwenkbar verlagerbar. Das Trichter-Modul 2 ist in Fig. 7 ebenfalls in einer relativ zum Zuführkammer-Modul 3 verlagerten Position dargestellt. Das Trichter-Modul 2 ist relativ zum Zuführkammer-Modul 3 um einer Trichter-Schwenkachse 30 geführt schwenkbar verlagerbar.

In der Darstellung gemäß Fig. 7 ist der Teig-Zuführkolben 6 aus der Teigteilmaschine 1 herausgenommen. Dabei wurde der Teig-Zuführkolben 6 von der Kolben-Tragvorrichtung 32 gelöst.

Das Zuführkammer-Modul 3, das Trichter-Modul 2, das Kolben-Modul 6 und das Mundstück-Modul 7 sind jeweils unabhängig voneinander relativ zum Rahmen 27 geführt verlagerbar. Der Rahmen 27 ist aus Gründen der Übersichtlichkeit in Fig. 7 nicht dargestellt.

Ferner sind das Kolben-Modul 6 und das Mundstück-Modul 7 modular aus der Teigteilmaschine 1 herausnehmbar.

Das Mundstück-Modul 7 kann durch die modulare Herausnehmbarkeit auf einfache Art und Weise durch ein anderes Mundstück-Modul ersetzt werden, welches eine andere Reihigkeit bzw. eine andere Anzahl von Übergabekanälen 8 aufweist. Ein segmentweises Blocken gewünschter Übergabekanäle 8 kann durch das Fehlen entsprechender Übergabekanäle 8 erreicht werden. Durch die Herausnehmbarkeit und Austauschbarkeit des Mundstück-Moduls 7 ist folglich eine flexible Anpassung der Teigteilmaschine 1 an verschiedene Anforderungen ermöglicht.

Auch das Zuführkammer-Modul 3, das Kolben-Modul 6 und das Trichter-Modul 2 sind durch die modulare Herausnehmbarkeit einfach durch anders gestaltete Module ersetzbar, wodurch eine flexible Anpassung der Teigteilmaschine 1 an verschiedene Anforderungen weiter verbessert ist.

Ferner sind zwei Kraftspanner vorgesehen, welche mit einer definierten Kraft das Zuführkammer-Modul 3 gegen das Mundstück-Modul 7 drücken. Dadurch ist wirkungsvoll eine Fehlbedienung verhindert, die zu einem zu großen Teigaustritt führen könnte. Alternativ können auch mehr als zwei Kraftspanner oder auch nur ein einziger Kraftspanner vorgesehen sein.

Die modulartige Ausgestaltung der Teigteilmaschine 1 vereinfacht insbesondere die Reinigung der Teigteilmaschine 1, wobei verschiedene Reinigungsstufen denkbar sind. So kann bei einer ersten Reinigungsstufe eine Reinigung der Teigteilmaschine 1 erfolgen, ohne das Module 2, 3, 6, 7 ausgebaut werden müssen, wobei eine verbesserte Zugänglichkeit durch eine geführte Verlagerbarkeit der Module 2, 3, 6, 7 gewährleistet ist. Bei einer zweiten Reinigungsstufe können einzelne Module, insbesondere die Module 2, 7 verschwenkt werden. Bei einer dritten Reinigungsstufe können einzelne Module, insbesondere die Module 6, 7 modular aus der Teigteilmaschine herausgenommen werden. Zum Verlagern, Verschwenken und Herausnehmen sind keine Werkzeuge notwendig. Eine Demontage und ein Zusammenbauen ist mittels der Schnellverbindungseinrichtungen ermöglicht.

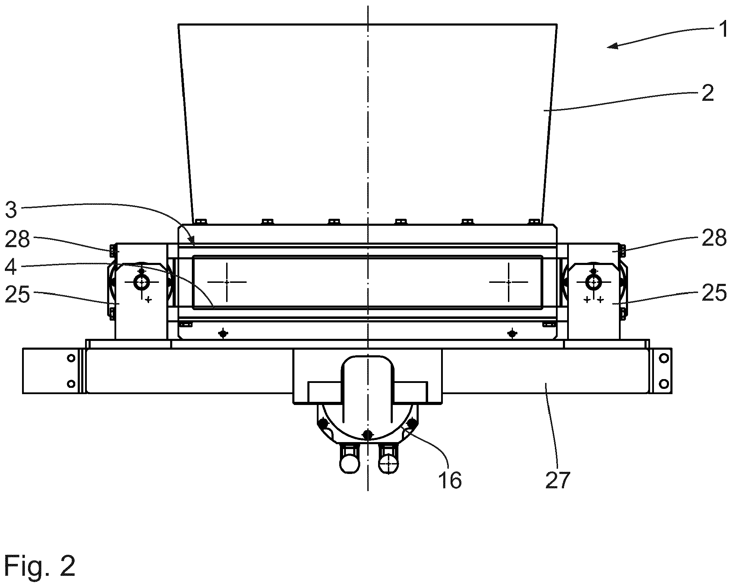

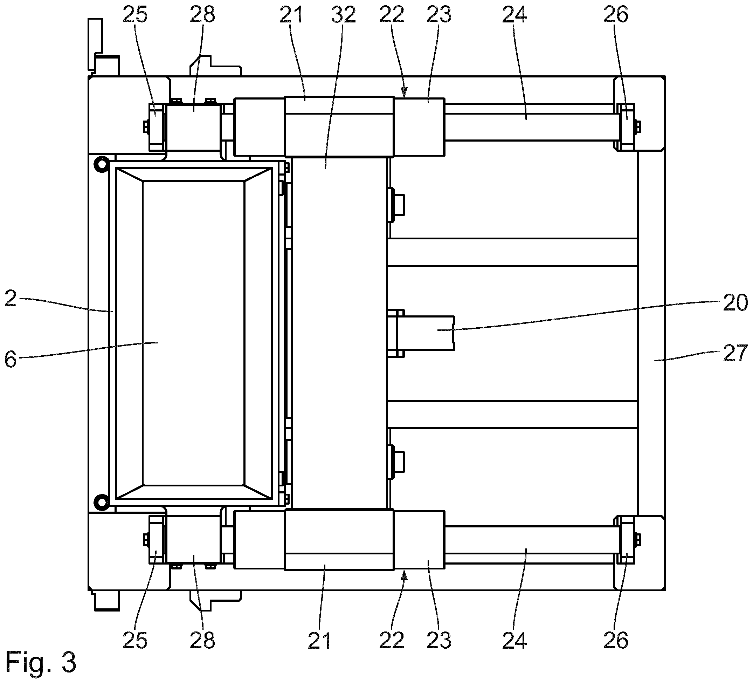

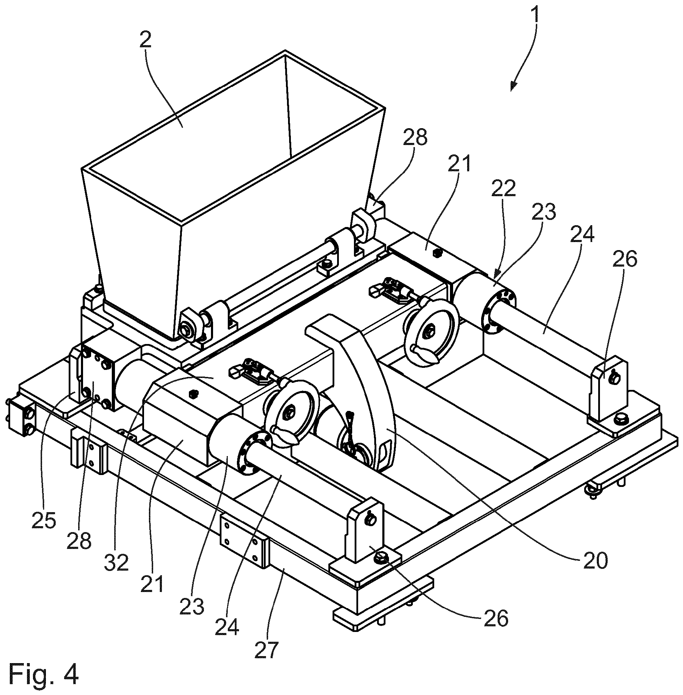

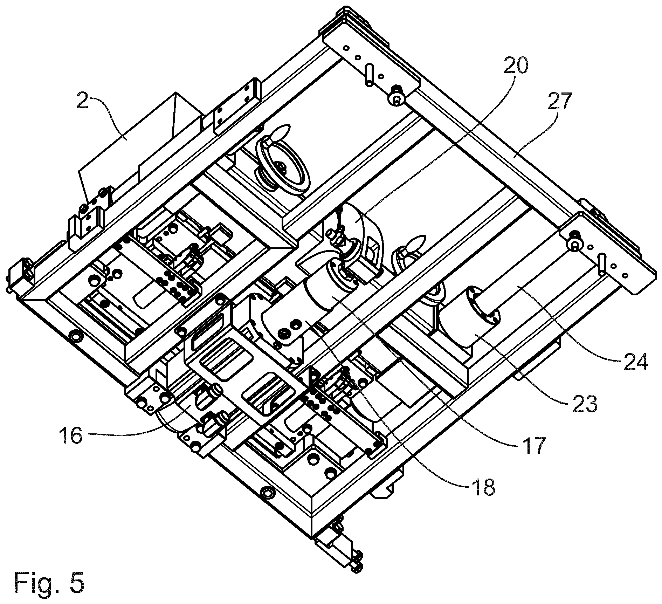

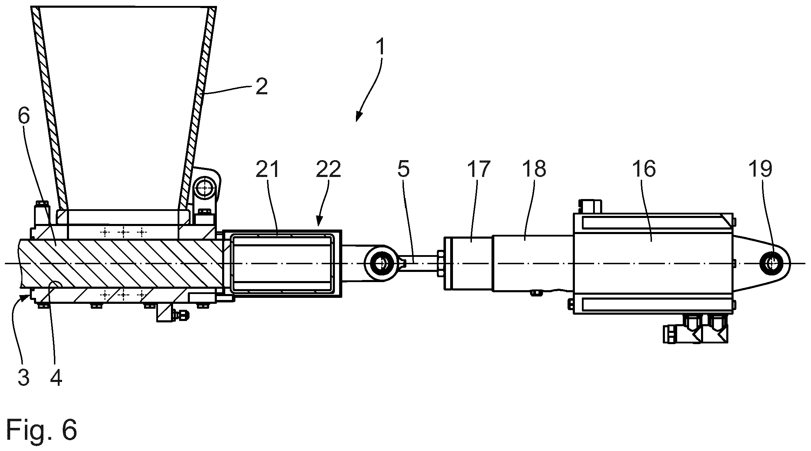

Fig. 6 zeigt eine alternative Anordnung des Linearaktors 16 zum Teig-Zuführkolben 6. Komponenten, die denjenigen entsprechen, die vorstehend unter Bezugnahme auf die Fig. 1 bis 5 bereits erläutert wurden, tragen die gleichen Bezugsziffern und werden nicht nochmals im Einzelnen diskutiert. Die alternative Anordnung gemäß Fig. 6 ist ebenfalls modulartig ausgebildet und umfasst ein Zuführkammer-Modul 3, ein Trichter-Modul 2, ein Kolben-Modul 6 und ein Mundstück-Modul 7.

Bei der Ausführung nach Fig. 6 ist der Linearaktor 16 ebenfalls in der Führungsebene 5 des Teig-Zuführkolbens 6 angeordnet. Die Antriebskomponente 17 wirkt direkt auf den Schlitten 21. Eine Umlenkverbindung 20 wie bei der Ausführung nach Fig. 1 entfällt. Die Linearführung 22 ist in der Fig. 6 schematisch und gebrochen angedeutet. Die Montageöse 19 kann direkt mit dem Schlitten 21 verbunden sein und an diesen andocken.

Bei beiden Anordnungsvarianten für den Linearaktor 16 nach den Fig. 1 bis 6 ist eine Erstreckung einer Baugruppe, zu der der Teig-Zuführkolben 6, die Linearführung 22 und der Linearaktor 16 gehören, senkrecht zur Führungsebene 5 nicht mehr als fünfmal so groß wie eine Erstreckung des Zuführkolbens 6 senkrecht zur Führungsebene 5. Bei der Anordnung nach Fig. 1 ist dieses Erstreckungsverhältnis etwa 4. Bei der Ausführung nach Fig. 6 kann dieses Erstreckungsverhältnis bis auf den Idealwert 1 reduziert werden.

## Patentansprüche

1. Teigteilmaschine (1)
- mit einem Teig-Zugabetrichter (2),
- mit einem am Auslass des Teig-Zugabetrichters (2) angeordneten Zuführkammerbehälter (3) mit einer Teig-Zuführkammer (4),
- mit einem Teig-Mundstück (7) im Teig-Förderweg nach der Teig-Zuführkammer (4), und
- mit mindestens einem hubverlagerbaren Teig-Zuführkolben (6) zum Zuführen des in der Teig-Zuführkammer (4) befindlichen Teiges zu dem Teig-Mundstück (7),
**dadurch gekennzeichnet dass**,
- die Teigteilmaschine zum Zwecke einer verbesserten Lösbarkeit modulartig ausgebildet ist und mindestens zwei der nachfolgend aufgeführten Module aufweist:
-- ein Zuführkammer-Modul (3), das durch den Zuführkammerbehälter (3) gebildet ist,
-- ein Trichter-Modul (2), das durch den Teig-Zugabetrichter (2) gebildet ist,
-- ein Kolben-Modul (6), das durch den Teig-Zuführkolben (6) gebildet ist, und
-- ein Mundstück-Modul (7), das durch das Teig-Mundstück (7) gebildet ist, wobei
- mindestens eine Schnellverbindungseinrichtung zum Zusammenbau und zur Demontage der Module vorgesehen ist.

2. Teigteilmaschine nach Anspruch 1, **dadurch gekennzeichnet, dass** das Zuführkammer-Modul (3) modular aus der Teigteilmaschine (1) demontierbar ist.

3. Teigteilmaschine nach Anspruch 1 oder 2, **dadurch gekennzeichnet, dass** das Kolben-Modul (6) modular aus der Teigteilmaschine (1) herausnehmbar ist.

4. Teigteilmaschine einem der vorstehenden Ansprüche, **dadurch gekennzeichnet, dass** das Mundstück-Modul (7) modular aus der Teigteilmaschine (1) herausnehmbar ist.

5. Teigteilmaschine nach einem der vorstehenden Ansprüche, **dadurch gekennzeichnet, dass** die Teigteilmaschine (1) einen Rahmen (27) aufweist.

6. Teigteilmaschine nach Anspruch 5, **dadurch gekennzeichnet, dass** das Zuführkammer-Modul (3), das Trichter-Modul (2), das Kolben-Modul (6) und das Mundstück-Modul (7) jeweils unabhängig voneinander relativ zu dem Rahmen (27) geführt verlagerbar sind.

7. Teigteilmaschine nach Anspruch 5, **dadurch gekennzeichnet, dass** das Zuführkammer-Modul (3) relativ zu dem Rahmen (27) geführt verlagerbar ist.

8. Teigteilmaschine nach einem der vorstehenden Ansprüche, **dadurch gekennzeichnet, dass** das Zuführkammer-Modul (3) relativ zum Teig-Zugabetrichter (2) geführt verlagerbar ist

9. Teigteilmaschine nach einem der vorstehenden Ansprüche, **dadurch gekennzeichnet, dass** das Mundstück-Modul (7) relativ zum Zuführkammer-Modul (3) geführt verlagerbar ist.

10. Teigteilmaschine nach einem der vorstehenden Ansprüche, **dadurch gekennzeichnet, dass** das Trichter-Modul (2) relativ zum Zuführkammer-Modul (3) geführt verlagerbar ist.

11. Teigteilmaschine nach einem der vorstehenden Ansprüche, **gekennzeichnet durch** eine Linearführung (22) zur Führung einer Hubverlagerung des Kolben-Moduls (6).

12. Teigteilmaschine nach Anspruch 1 und 7, **gekennzeichnet durch** eine Linearführung (22) zur Führung einer Verlagerung des Zuführkammer-Moduls (3).

13. Teigteilmaschine nach einem der vorstehenden Ansprüche, **dadurch gekennzeichnet, dass** ein Hubverlagerungsantrieb (16) des Teig-Zuführkolbens (6) als Linearaktor mit einer linear angetriebenen Antriebskomponente (17) ausgeführt ist.

14. Teigteilmaschine nach Anspruch 13, **dadurch gekennzeichnet, dass** der Linearaktor (16) als elektromechanischer Aktor ausgeführt ist, wobei die Antriebskomponente (17) dann als elektromechanische Stellkomponente ausgeführt ist.

15. Teigverarbeitungsanlage mit einer Teigteilmaschine nach einem der Ansprüche 1 bis 14.

## Claims

1. Dough dividing machine (1) comprising
- a dough adding funnel (2),
- a feed chamber container (3) arranged at the outlet of the dough adding funnel (2) with a dough feed chamber (4),
- a dough mouthpiece (7) in the dough conveying path after the dough feed chamber (4), and
- at least one stroke-displaceable dough feeding plunger (6) for feeding the dough in the dough feed chamber (4) to the dough mouthpiece (7), **characterised in that** the dough dividing machine is designed to be modular to improve its disassembly and comprises at least two of the following modules:
-- a feed chamber module (3) formed by the feed chamber container (3),
-- a funnel module (2) formed by the dough adding funnel (2),
-- a plunger module (6) formed by the dough feeding plunger (6) and
-- a mouthpiece module (7) formed by the dough mouthpiece (7), wherein
- at least one rapid connecting device is provided for assembling and disassembling the modules.

2. Dough dividing machine according to claim 1, **characterised in that** the feed chamber module (3) can be removed modularly from the dough dividing machine (1).

3. Dough dividing machine according to claim 1 or 2, **characterised in that** the plunger module (6) can be removed modularly from the dough dividing machine (1).

4. Dough dividing machine according to any one of the preceding claims, **characterised in that** the mouthpiece module (7) can be removed modularly from the dough dividing machine (1).

5. Dough dividing machine according to any one of the preceding claims, **characterised in that** the dough dividing machine (1) comprises a frame (27).

6. Dough dividing machine according to claim 5, **characterised in that** the feed chamber module (3), the funnel module (2), the plunger module (6) and the mouthpiece module (7) can each be displaced relative to the frame (27) independently of one another.

7. Dough dividing machine according to claim 5, **characterised in that** the feed chamber module (3) can be displaced relative to the frame (27).

8. Dough dividing machine according to any one of the preceding claims, **characterised in that** the feed chamber module (3) can be displaced relative to the dough adding funnel (2).

9. Dough dividing machine according to any one of the preceding claims, **characterised in that** the mouthpiece module (7) can be displaced relative to the feed chamber module (3).

10. Dough dividing machine according to any one of the preceding claims, **characterised in that** the funnel module (2) can be displaced relative to the feed chamber module (3).

11. Dough dividing machine according to any one of the preceding claims, **characterised by** a linear guide (22) for guiding a stroke displacement of the of the plunger module (6).

12. Dough dividing machine according to claim 1 and 7, **characterised by** a linear guide (22) for guiding a displacement of the feed chamber module (3).

13. Dough dividing machine according to any one of the preceding claims, **characterised in that** a stroke displacement drive (16) of the dough feeding plunger (6) is designed as linear actuator with a linearly driven drive component (17).

14. Dough dividing machine according to claim 13, **characterised in that** the linear actuator (16) is designed as an electromechanical actuator, wherein the drive component (17) is designed here as an electromechanical actuating component.

15. Dough processing machine with a dough dividing machine according to any one of claims 1 to 14.

## Revendications

1. Diviseuse de pâte (1)
- avec une trémie d'alimentation en pâte (2),
- avec un récipient à compartiment d'amenée (3) avec un compartiment d'amenée de pâte (4) situé à la sortie de la trémie d'alimentation en pâte (2),
- avec une buse d'éjection de pâte (7) en aval du compartiment d'amenée de pâte (4) sur le trajet de transport de la pâte, et
- avec au moins un piston d'amenée de pâte (6) mobile sur une course de piston pour refouler la pâte se trouvant dans le compartiment d'amenée de pâte (4) vers la buse d'éjection de pâte (7),
**caractérisée en ce que**
- ladite diviseuse de pâte est réalisée de manière modulaire pour en faciliter le démontage, et **en ce qu'**elle présente au moins deux des modules ci-dessous :
-- un module de compartiment d'amenée (3) formé par le récipient à compartiment d'amenée (3),
-- un module de trémie (2) formé par la trémie d'alimentation en pâte (2),
-- un module de piston (6) formé par le piston d'amenée de pâte (6), et
-- un module de buse (7) formé par la buse d'éjection de pâte (7),
- au moins un dispositif de raccord rapide étant prévu pour le montage et le démontage des modules.

2. Diviseuse de pâte selon la revendication 1, **caractérisée en ce que** le module de compartiment d'amenée (3) est démontable modulairement de la diviseuse de pâte (1).

3. Diviseuse de pâte selon la revendication 1 ou 2, **caractérisée en ce que** le module de piston (6) est retirable modulairement de la diviseuse de pâte (1).

4. Diviseuse de pâte selon l'une des revendications précédentes, **caractérisée en ce que** le module de buse (7) est retirable modulairement de la diviseuse de pâte (1).

5. Diviseuse de pâte selon l'une des revendications précédentes, **caractérisée en ce que** ladite diviseuse de pâte (1) comporte un châssis (27).

6. Diviseuse de pâte selon la revendication 5, **caractérisée en ce que** le module de compartiment d'amenée (3), le module de trémie (2), le module de piston (6) et le module de buse (7) peuvent respectivement être déplacés indépendamment les uns des autres par rapport au châssis (27).

7. Diviseuse de pâte selon la revendication 5, **caractérisée en ce que** le module de compartiment d'amenée (3) peut être déplacé par rapport au châssis (27).

8. Diviseuse de pâte selon l'une des revendications précédentes, **caractérisée en ce que** le module de compartiment d'amenée (3) peut être déplacé par rapport à la trémie d'alimentation en pâte (2).

9. Diviseuse de pâte selon l'une des revendications précédentes, **caractérisée en ce que** le module de buse (7) peut être déplacé par rapport au module de compartiment d'amenée (3).

10. Diviseuse de pâte selon l'une des revendications précédentes, **caractérisée en ce que** le module de trémie (2) peut être déplacé par rapport au module de compartiment d'amenée (3).

11. Diviseuse de pâte selon l'une des revendications précédentes, **caractérisée par** un guidage linéaire (22) pour le guidage d'une course du module de piston (6).

12. Diviseuse de pâte selon les revendications 1 et 7, **caractérisée par** un guidage linéaire (22) pour le guidage d'un déplacement du module de compartiment d'amenée (3).

13. Diviseuse de pâte selon l'une des revendications précédentes, **caractérisée en ce qu'**un entraînement de course de piston (16) du piston d'amenée de pâte (6) est réalisé comme actionneur linéaire avec un composant d'entraînement (17) entraîné linéairement.

14. Diviseuse de pâte selon la revendication 13, **caractérisée en ce que** l'actionneur linéaire (16) est réalisé comme actionneur électromécanique, le composant d'entraînement (17) étant alors réalisé comme composant de réglage électromécanique.

15. Installation pour le traitement de pâte avec une diviseuse de pâte selon l'une des revendications 1 à 14.
